# FASCICULE DE BREVET EUROPEEN

(11) **EP 1 197 385 B1**
(45) Date de publication et mention de la délivrance du brevet: **13.11.2002**
(21) Numéro de dépôt: 01203824.6
(22) Date de dépôt: 10.10.2001
(51) Int. Cl.: B60P 1/28, B62D 33/02

(54) **Benne basculante pour application aux travaux publics**
Kippmulde zur Verwendung bei Erdbauarbeiten
Tipping bucket for use in public works

(30) Priorité: 11.10.2000 FR 0013102
(43) Date de publication de la demande: 17.04.2002
(73) Titulaire: Legras Industries SA, 51206 Epernay Cedex (FR)
(72) Inventeur: Legras, Jean-Remy, 51200 Epernay (FR)
(74) Mandataire: Gérardin, Robert Jean René

(56) Documents cités:
- EP-A- 0 448 490
- EP-A- 0 749 870
- US-A- 1 627 336
- US-A- 5 460 431

## Description

L'invention concerne une benne basculante pour application aux travaux publics, permettant un étalement régulier de la charge lors du déversement.

On utilise actuellement, pour les travaux publics, des bennes basculantes comportant un fond plat et des parois verticales. Pour des raisons de solidité et de résistance aux chocs lors des remplissages, le fond est généralement renforcé, sur sa paroi externe, de nervures longitudinales et de renforts transversaux constituant une véritable structure. Les parois sont, elles aussi, renforcées le long de leurs bords, et, bien souvent, sur leurs faces externes, par des renforts transversaux ou un renfort longitudinal oblique.

Ces renforts compliquent la benne et en augmentent considérablement le. prix de revient.

Pour remédier à cette situation, on a réalisé des bennes de section demi-ronde, à deux longerons de rigidification, servant aussi de cadre d'appui sur le châssis du véhicule. Ces bennes offrent d'importants avantages, tant pour leur fabrication que dans leur exploitation. En effet, leur constitution est plus simple et elles offrent, du fait de leur forme, une meilleure résistance aux impacts lors du chargement et un meilleur écoulement de la charge, qui se trouve, en permanence, ramenée vers le plan médian de la benne, du fait de la section transversale circulaire de celle-ci.

Par contre, il résulte de cela une concentration de l'usure dans la partie centrale, là où s'écoule le produit, et une difficulté d'implantation de porte universelle, du fait de la forme circulaire de la section arrière.

Par ailleurs, ces bennes ne peuvent être utilisées, compte-tenu de la concentration de la charge dans leur partie médiane lors de leur déchargement, pour des travaux de finition impliquant un étalement régulier de la charge, accompagné d'un déplacement à très faible vitesse du véhicule ; le déversement étant, pendant ce temps, contrôlé par la porte universelle.

De plus, pour des raisons de difficulté de cintrage de tôle de forte épaisseur, il est courant de réaliser de telles bennes par pliages successifs, en respectant une section polygonale, mais des problèmes se posent également pour le pliage ; aussi, est t'on généralement amené à réaliser le corps de la benne en trois parties, fond et côtés, puis à assembler ensuite celles-ci par soudage latéral.

L'état de la technique évoqué ci-dessus est reflété, en particulier, par les documents suivants
- FR 2 745 509 ayant pour objet un procédé de fabrication d'un corps de benne à profil concave à partir d'une tôle de grand format, en imposant un profil voisin par des moyens de conformation, en solidarisant, tout en maintenant ce profil, une plaque d'obturation à l'une des extrémités et, à l'autre extrémité, un renfort de rigidification, conformé selon le profil définitif, puis, après avoir rigidifié les bords longitudinaux, de procéder à un traitement mécanique des zones à forte incurvation et de lâcher alors la prise des moyens de conformation.

On comprend que l'application d'un tel procédé exige beaucoup d'énergie pour la déformation de la tôle et de temps pour la solidarisation des éléments de renforts latéraux et d'extrémités, sans que cela permette, pour autant, de particulariser certaines parties lors du formage de la tôle, tel que, par exemple, d'obtenir une bande longitudinale plate dans le plan médian longitudinal de la benne.
- FR 2 735 430 concernant une benne basculante comportant, entre ses extrémités avant et arrière, une paroi autoportante à section en U constituée d'une tôle de fond et de deux tôles latérales, à panneaux de base superposés à une tôle de fond, à laquelle elles sont solidarisées par soudure. Les tôles latérales ont une forme incurvée, obtenue par pliage multiple, réservant des bandes longitudinales d'inclinaison progressive. Le bord supérieur de chaque tôle latérale est renforcé par une nervure tubulaire obtenue par pliage dans un même sens.

On remarque que cette benne exige la réalisation séparée de quatre éléments, incluant la tôle d'extrémité avant, qui exigent d'être assemblés ensuite par soudage, avec des risques de fragilité, sous impact, des cordons de soudure reliant les tôles latérales à la tôle de fond. De plus, il est impossible d'équiper directement de telles bennes d'une porte universelle, ce qui oblige à équiper l'extrémité arrière de celles-ci d'une pièce d'adaptation de forme appropriée.

La présente invention a pour but de remédier aux inconvénients ci-dessus évoqués, présentés par les bennes basculantes pour application aux travaux publics existant actuellement dans l'état de la technique. En effet, cette invention, telle qu'elle est caractérisée dans les revendications, résout le problème consistant à créer une benne basculante pour application aux travaux publics, avec laquelle, d'une part, la résistance au chargement et la facilité d'écoulement soient assurées, tout en permettant l'étalement régulier de la charge sans concentrer l'usure dans la partie médiane, et, d'autre part, l'implantation directe et aisée de portes universelles soit possible.

Les avantages obtenus; grâce à cette invention, consistent, essentiellement, en ce qu'elle permet d'obtenir, sur l'avant de la benne, une très bonne résistance au chargement, lors du déversement de la charge à l'intérieur de celle-ci, tout en facilitant l'écoulement rapide de la totalité de cette charge vers l'arrière lors du déchargement, et de réaliser, lors du déversement, un étalement régulier de celle-ci sur une largeur correspondant à celle du corps de benne ; cette possibilité étant tout particulièrement appréciable lors des travaux de finition (déversement de gravillons par exemple).

D'autres caractéristiques et avantages apparaîtront dans la description qui va suivre d'une benne basculante pour application aux travaux publics, donnée à titre d'exemple non limitatif, au regard des dessins annexés, sur lesquels :
- la figure 1 représente une vue de l'avant, en perspective, de la tôle constituant le corps de benne, après formage de celle-ci,
- la figure 2 représente une vue de l'arrière, en perspective, de la benne, sur laquelle l'un des montants n'est représenté qu'en trait mixte pour montrer l'extrémité du raidisseur latéral correspondant.

Les figures représentent une benne basculante pour application aux travaux publics, comportant un corps de benne **10** en tôle formée selon des plis **11** non parallèles, afin d'obtenir une juxtaposition de panneaux triangulaires **12, 18**, rectangulaires **13**, trapézoïdaux **14** formant les côtés à convergence variable, vers un panneau trapézoïdal formant un fond **15** de largeur progressive de l'avant **16** vers l'arrière **17** du corps de benne **10,** fermé, sur l'avant **16**, par une plaque d'obturation **20,** dont le bord supérieur **21** est relié à des raidisseurs latéraux **30, 31** par des consoles **22** et **23** ; l'extrémité arrière **17** comportant, de chaque côté, des montants raidisseurs verticaux **40** et **41**.

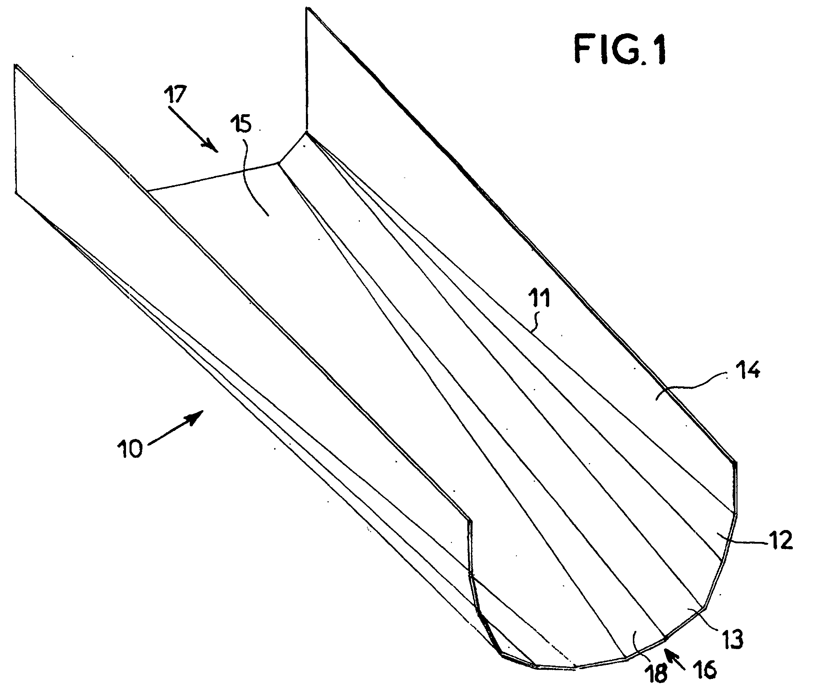

En examinant maintenant plus en détail la figure 1, on remarque que la tôle constituant le corps de benne **10** est pliée successivement de façon irrégulière, afin d'obtenir, par une succession de plis **11**, un panneau trapézoïdal **14**, deux panneaux triangulaires convergents **12**, un panneau rectangulaire **13**, un nouveau panneau triangulaire **18** et un panneau de fond trapézoïdal **15**, puis des panneaux triangulaires, rectangulaires et trapézoïdaux identiques et symétriques de ceux déjà réalisés, par rapport au plan médian longitudinal de la tôle, ceci, en respectant des angles permettant d'obtenir, sur l'avant **16,** une section polygonale régulière, de forme générale circulaire, et, sur l'arrière **17**, une section rectangulaire à angle biseauté.

On remarque, qu'en procédant de cette façon, on obtient une transformation progressive, de l'avant **16** vers l'arrière **17**, de la section du corps de benne **10**, qui passe ainsi d'une section polygonale semi-circulaire à une section rectangulaire, le panneau de fond trapézoïdal **15** étant encadré latéralement par deux panneaux triangulaires **18** surmontés chacun d'un panneau rectangulaire **13,** dont l'extrémité arrière **17** constitue la partie biseautée de l'extrémité rectangulaire formant l'ouverture de déchargement de la benne basculante.

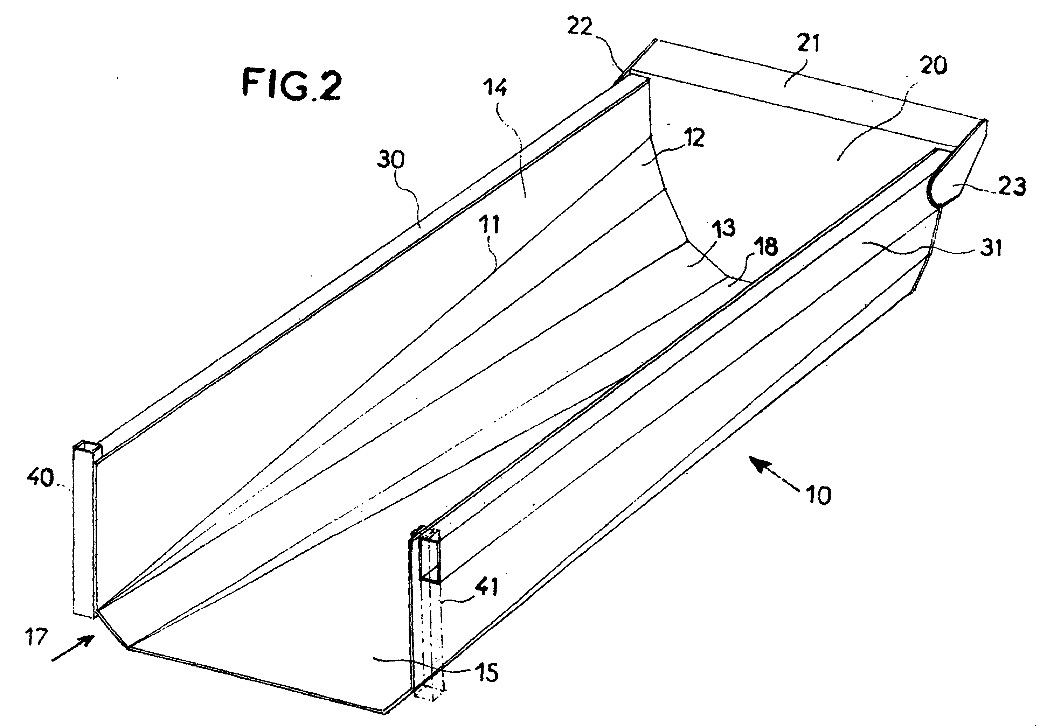

En se rapportant maintenant à la figure 2, représentant le corps de benne **10** équipé de sa plaque d'obturation **20,** de ses raidisseurs latéraux **30, 31** et de ses montants raidisseurs **40, 41,** on remarque que la forme donnée à la tôle constituant le corps de benne **10,** par suite des opérations de pliage exposées ci-dessus, est maintenue rigidement par l'intermédiaire : de la plaque d'obturation **20**, des raidisseurs latéraux **30, 31** et des montants **40, 41**, reliés, respectivement, par les consoles **22, 23** et les extrémités des raidisseurs latéraux **30, 31** ; étant précisé que les montants **40, 41** sont utilisés pour fixer la porte universelle basculante (non représentée), reliant les extrémités supérieures de ceux-ci.

On remarque aussi que, compte-tenu de la convergence, vers les angles, de l'ouverture de la benne de tous les panneaux **12, 13, 14** et **18** formant les côtés du corps de benne **10** et de la divergence, vers l'arrière, du panneau constituant le fond **15**, les matériaux contenus dans la benne sont, lors du basculement pour déchargement, canalisés vers l'arrière **17,** puis progressivement répartis sur toute la largeur du fond **15,** avant écoulement des matériaux sur le sol ; les panneaux rectangulaires **13,** situés de part et d'autre du fond **15,** disposés obliquement par rapport à celui-ci, étant, quant à eux, destinés à renvoyer la chargé vers le dit fond **15** lors du glissement de celle-ci au moment du déchargement, sans aucun risque de retenue et, par conséquent, d'encrassement, étant donné l'obliquité importante ménagée entre les panneaux reliant les côtés de la benne au fond **15**.

Comme cela a été indiqué plus haut, les raidisseurs latéraux **30, 31** et les montants **40, 41**, constitués, dans cet exemple, de profilés tubulaires de série rapportés contre les parois du corps de benne **10** par soudure ou tout autre moyen, peuvent être formés par pliages successifs, à angle droit, d'une bande de tôle prévue pour cela dans le prolongement de la tôle destinée à la réalisation de la poutre principale du corps de benne **10**.

La benne basculante selon l'invention est destinée, principalement, aux travaux publics, mais rien ne s'opposerait à son utilisation dans d'autres domaines du transport de charges en vrac, sous réserve d'adaptations mineures ne sortant pas du cadre de la présente invention.

## Revendications

1. Benne basculante pour application aux travaux publics, reliée au châssis d'un véhicule de façon à pouvoir pivoter, vers le haut et vers l'arrière, entre une position de transport où elle prend appui sur le châssis sur toute sa longueur, et une position de déversement permettant, à la charge, de glisser vers l'extérieur sous son propre poids, **caractérisée en ce qu'**elle comporte : un corps de benne **(10),** constitué d'une tôle pliée selon une forme concave, présentant, sur l'avant (**16**), un profil polygonal semi-circulaire et, sur l'arrière **(17),** un profil semi-rectangulaire, ainsi qu'une plaque d'obturation (**20**) rapportée sur l'avant **(16)**.

2. Benne basculante selon la revendication 1, **caractérisée en ce que** la tôle constituant le corps de benne (**10**) est pliée de façon à obtenir un passage progressif et régulier d'un profil polygonal semi-circulaire à un profil semi-rectangulaire, de l'avant (**16**) vers l'arrière (**17**) du dit corps de benne **(10).**

3. Benne basculante selon la revendication 1, **caractérisée en ce que** le corps de benne **(10)** est muni de deux montants raidisseurs verticaux (**40, 41)** situés de chaque côté de l'extrémité arrière **(17),** et de deux raidisseurs latéraux (**30, 31),** situés le long des bords supérieurs de la tôle formant le corps de la benne **(10),** dont l'extrémité avant est reliée à la plaque d'obturation **(20)** et dont l'autre extrémité est reliée à l'extrémité supérieure de chacun des montants raidisseurs verticaux **(40, 41)**.

4. Benne basculante selon la revendication 1, **caractérisée en ce que** le bord supérieur **(21)** de la plaque d'obturation (**20**) rapportée sur l'extrémité avant **(16)** du corps de benne (**10**) est plié obliquement vers l'avant.

5. Benne basculante selon la revendication 4, **caractérisée en ce que** chacune des extrémités de la partie pliée obliquement vers l'avant de la plaque d'obturation (**20**) est reliée par une console (**22, 23**), à l'extrémité des raidisseurs latéraux (**30, 31**) correspondants.

6. Benne basculante selon la revendication 5, **caractérisée en ce que** chaque console **(22, 23)** est constituée d'une plaque rapportée contre la face externe du raidisseur latéral **(30, 31)** correspondant et contre l'extrémité de la partie pliée obliquement vers l'avant de la plaque d'obturation **(20)** du corps de benne **(10).**

7. Benne basculante selon la revendication 3, **caractérisée en ce que** les raidisseurs latéraux **(30, 31)** sont constitués de profilés creux, de section rectangulaire.

8. Benne basculante selon la revendication 7, **caractérisée en ce que** les profilés creux, utilisés comme raidisseurs latéraux (**30, 31**), sont rapportés contre les bords externes du corps de benne (**10**).

9. Benne basculante selon la revendication 7, **caractérisée en ce que** les profilés creux, utilisés comme raidisseurs latéraux **(30, 31)**, sont réalisés par pliages successifs, à angle droit, des bords de la tôle constituant le corps de benne **(10)**.

10. Benne basculante selon la revendication 3, **caractérisée en ce que** les deux montants raidisseurs verticaux **(40, 41)**, situés de chaque côté de l'extrémité arrière **(17)** du corps de benne **(10),** sont dès profilés creux rapportés.

11. Benne basculante selon la revendication 3, **caractérisée en ce que** les montants raidisseurs verticaux**(40, 41)**, situés de chaque côté de l'extrémité arrière **(17)** du corps de benne **(10)**, sont réalisés par pliages successifs, à angle droit, de la partie correspondante de la tôle constituant le corps de benne **(10)**.

## Patentansprüche

1. Kippermulde zum Einsatz bei Bauarbeiten, die mit dem Chassis eines Fahrzeugs in schwenkbarer Weise derart verbunden ist, daß sie nach oben und nach hinten schwenken kann zwischen einer Transportposition, in der sie sich auf dem Chassis über ihre ganze Länge abstützt, und einer Entleerungsposition, die es der Ladung ermöglicht, unter ihrem Eigengewicht nach außen zu gleiten, **dadurch gekennzeichnet, daß** sie einen Muldenkorpus (10) umfaßt, der aus einem gemäß einer konkaven Form gefalteten Blech besteht, welches vorne (16) ein halbkreisförmiges Vielkantprofil und hinten (17) ein halbrechteckiges Profil sowie eine vorne (16) angesetzte Absperrklappe (20) aufweist.

2. Kippermulde nach Anspruch 1, **dadurch gekennzeichnet, daß** das den Muldenkorpus (10) bildende Blech derart gefaltet ist, daß ein progressiver und regelmäßiger Übergang von einem halbkreisförmigen Vielkantprofil zu einem halbrechteckigen Profil von vorne (16) nach hinten (17) des Muldenkorpus (10) erreicht wird.

3. Kippermulde nach Anspruch 1, **dadurch gekennzeichnet, daß** der Muldenkorpus (10) versehen ist mit zwei vertikalen Versteifungspfosten (40, 41), die beiderseits des hinteren Endes (17) angeordnet sind, und mit zwei seitlichen Aussteifungen (30, 31), die entlang der oberen Ränder des den Muldenkorpus (10) bildenden Blechs angeordnet sind, deren vorderes Ende mit der Absperrklappe (20) verbunden ist und deren anderes Ende mit dem oberen Ende jedes der vertikalen Versteifungspfosten (40, 41) verbunden ist.

4. Kippermulde nach Anspruch 1, **dadurch gekennzeichnet, daß** der obere Rand (21) der an das vordere Ende (16) des Muldenkorpus (10) der angesetzten Absperrklappe (20) schräg nach vorne gefaltet ist.

5. Kippermulde nach Anspruch 4, **dadurch gekennzeichnet, daß** jedes der Enden des schräg nach vorne gefalteten vorderen Teils der Absperrklappe (20) über einen Träger (22, 23) mit dem Ende der entsprechenden seitlichen Aussteifungen (30, 31) verbunden ist.

6. Kippermulde nach Anspruch 5, **dadurch gekennzeichnet**, das jeder Träger (22, 23) durch eine gegen die Außenseite der entsprechenden seitlichen Aussteifungen (30, 31) und gegen das Ende des schräg nach vorne gefalteten Teils der Absperrklappe (20) des Muldenkorpus (10) angesetzten Platte gebildet ist.

7. Kippermulde nach Anspruch 3, **dadurch gekennzeichnet, daß** die seitlichen Aussteifungen (30, 31) aus Hohlprofilen mit rechteckigem Querschnitt gebildet sind.

8. Kippermulde nach Anspruch 7, **dadurch gekennzeichnet, daß** die als seitliche Aussteifungen (30, 31) verwendeten Hohlprofile gegen die Außenränder des Muldenkorpus (10) angesetzt sind.

9. Kippermulde nach Anspruch 7, **dadurch gekennzeichnet, daß** die als seitliche Aussteifungen (30, 31) verwendeten Hohlprofile durch sukzessives Falten im rechten Winkel der Ränder des den Muldenkorpus (10) bildenden Blechs hergestellt sind.

10. Kippermulde nach Anspruch 3, **dadurch gekennzeichnet, daß** die beiden vertikalen Aussteiffungspfosten (40, 41), die beiderseits des hinteren Endes (17) des Muldenkorpus (10) angeordnet sind, angesetzte Hohlprofile sind.

11. Kippermulde nach Anspruch 3, **dadurch gekennzeichnet, daß** die vertikalen Aussteifungspfosten (40, 41), die beiderseits am hinteren Ende (17) des Muldenkorpus (10) angeordnet sind, und durch sukzessives Falten im rechten Winkel des entsprechenden Teils des den Muldenkorpus (10) bildenden Blechs hergestellt sind.

## Claims

1. A dumper body for use in public works, linked to the chassis of a vehicle in such a manner as to be able to tip forwards and backwards between a transport position in which its entire length rests on the chassis, and a tipping position in which the load is able to slide out under its own weight,
**characterised in that**
it comprises: the body (10) itself which consists of a metal sheet folded into a concave form and having a semi-circular polygonal section at the front (16) and a semi-rectangular section at the back (17), and a closing plate (20) which is attached to the front (16).

2. A dumper body in accordance with claim 1,
**characterised in that**
the metal sheet forming the body (10) is folded in such a manner as to produce a progressive and regular passage from a semi-circular polygonal section to a semi-rectangular section from the front (16) to the back (17) of said body (10).

3. A dumper body in accordance with claim 1,
**characterised in that**
the body (10) is provided with two vertical reinforcing uprights (40, 41) situated on either side of the back end (17) and two lateral reinforcing members (30, 31) situated along the upper edges of the metal sheet forming the body (10) itself, the front ends thereof being linked to the closing plate (20) and the other ends being linked to the upper edge of each of the vertical reinforcing uprights (40, 41).

4. A dumper body in accordance with claim 1,
**characterised in that**
the upper edge (21) of the closing plate (20) attached to the front end (16) of the body (10) is folded obliquely forward.

5. A dumper body in accordance with claim 4,
**characterised in that**
each of the ends of the part of the closing plate (20) which is folded obliquely forward is linked by a bracket (22, 23) to the end of the corresponding lateral reinforcing member (30, 31).

6. A dumper body in accordance with claim 5,
**characterised in that**
each bracket (22, 23) consists of a plate attached to the outer face of the corresponding lateral reinforcing member (30, 31) and to the end of the part of the closing plate (20) of the dumper body (10) which is folded obliquely forward.

7. A dumper body in accordance with claim 3,
**characterised in that**
the lateral reinforcing members (30, 31) consist of hollow sections of rectangular cross-section.

8. A dumper body in accordance with claim 7,
**characterised in that**
the hollow sections used as lateral reinforcing members (30, 31) are attached to the external edges of the body (10).

9. A dumper body in accordance with claim 7,
**characterised in that**
the hollow sections used as lateral reinforcing members (30, 31) are produced by making successive right-angled folds in the edges of the metal sheet which forms the body (10).

10. A dumper body in accordance with claim 3,
**characterised in that**
the two vertical reinforcing uprights (40, 41) located on either side of the back end (17) of the body (10) are attached hollow sections.

11. A dumper body in accordance with claim 3,
**characterised in that**
the two vertical reinforcing uprights (40, 41) located on either side of the back end (17) of the body (10) are produced by making successive right-angled folds in the corresponding part of the metal sheet forming the body (10).
